(19) **Europäisches Patentamt**
**European Patent Office**
**Office européen des brevets**

(11) **EP 1 725 933 B1**

(12) **EUROPEAN PATENT SPECIFICATION**

(45) Date of publication and mention
of the grant of the patent:
**26.11.2008 Bulletin 2008/48**

(21) Application number: **04718483.3**

(22) Date of filing: **08.03.2004**

(51) Int Cl.:
***G06F 9/45*** *(2006.01)*

(86) International application number:
**PCT/US2004/006870**

(87) International publication number:
**WO 2005/098618 (20.10.2005 Gazette 2005/42)**

(54) **METHOD FOR RECOGNITION OF FULL-WORD SATURATING ADDITION AND SUBTRACTION**

VERFAHREN FÜR DIE ERKENNUNG VON SÄTTIGENDER VOLLWORT-ADDITION UND -SUBSTRAKTION

PROCEDE DE RECONNAISSANCE D'ADDITION ET DE SOUSTRACTION EN MOT ENTIER SATURANTES

(84) Designated Contracting States:
**AT BE BG CH CY CZ DE DK EE ES FI FR GB GR HU IE IT LI LU MC NL PL PT RO SE SI SK TR**

(43) Date of publication of application:
**29.11.2006 Bulletin 2006/48**

(73) Proprietor: **Sandbridge Technologies, Inc.
White Plains, NY 10601 (US)**

(72) Inventors:
• **MOUDGILL, Mayan
White Plains, NY 10607 (US)**
• **KOTLYAR, Vladimir
Stamford, CT 06902 (US)**

(74) Representative: **Strehl, Peter
Strehl Schübel-Hopf & Partner
Maximilianstrasse 54
80538 München (DE)**

(56) References cited:
**US-A- 4 656 583**

• **JOHN GLOSSNER ET AL: "Trends in compilable DSP architecture" IEEE WORKSHOP SIGNAL PROCESSING SYSTEMS SIPS, 2000, pages 1-19, XP002299859**
• **D. BATTEN, S. JINTURKAR, J. GLOSSNER, M. SCHULTE, P. D'ARCY: "A New Approach to DSP Intrinsic Functions" PROCEEDINGS OF THE HAWAII INTERNATIONAL CONFERENCE ON SYSTEM SCIENCES, January 2000 (2000-01), pages 1-10, XP002299860**
• **JOHNSON R ET AL: "DEPENDENCE-BASED PROGRAM ANALYSIS" ACM SIGPLAN NOTICES, ASSOCIATION FOR COMPUTING MACHINERY, NEW YORK, US, vol. 28, no. 6, 1 June 1993 (1993-06-01), pages 78-89, XP000380801 ISSN: 0362-1340 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

A new method for recognition of full-word saturating addition and subtraction, in general and more specifically to a method based on solution of data-flow equations derived from the analyzed computer programs. This is in contrast to currently employed methods that are based on matching fixed patterns in program code.

BACKGROUND AND SUMMARY OF THE INVENTION

Reference made herein and listed at the end are referred to herein as necessary for understanding and implementing of the present invention.

Saturating arithmetic is widely used in digital signal processing (DSP) applications. Full-word saturating arithmetic operations work by setting their result to a pre-defined maximum or minimum in those situations where the corresponding basic 2's complement operations overflow or underflow.

Modem digital signal processors provide fast implementations of saturating operations. At the same time, many DSP applications are written in a standard programming language (such as ANSI C) with saturating operations coded as subroutines or macros in terms of basic 2's complement operations. In order to provide fast execution of such programs it is important to have an optimizing compiler automatically recognize and convert code fragments to individual saturating operations whenever possible.

The prior art in compiling for digital signal processors with saturating operations can be divided into two categories: a) special data types or intrinsic functions are used to signal to the compiler which +/- operations should be treated as saturating; and b) pattern matching of program fragments is used to discover saturating operations. The task of automatically recognizing saturating operations is complicated by the fact that there are many ways of programming such operations. An optimizing compiler relying on simple pattern recognition would have to test for a large number of patterns.

The present invention solves the problem of recognizing saturating addition and subtraction by capturing the essence of these operations in a set of data-flow program analysis equations that can be solved using well-known techniques in the area of optimizing compilers (see Ref 1, 5, 6, 7).

The method of formulating and solving equations that facilitate recognition of full word saturating addition and subtraction, includes formulating, for each basis addition statement $z=x+y$ or subtraction statement $z=x-y$, data flow equations that describe properties of the program statements being analyzed; and solving the data flow equations.

The following properties of the program can be used:

(a) the values BITS of program variables as Boolean functions of the sign bits of $x$, $y$ and $z$;
(b) the condition COND under which program statements are executed as Boolean functions of the sign bits of $x$, $y$ and $z$; and
(c) the condition REACH of which values of variables reach any given use of $z$ when overflow/underflow/neither occurs.

The method includes replacing z in a statement S of the program that uses z with the use of $z_{sat}$ if and only if all of the following conditions hold for that statement S: a) the only values of z that reach S assigns SATMAX to z when overflow has occurred, b) the only values of z that reach S assigns SATMIN to z if underflow has occurred, and c) the only values of z that reaches S is from the basis statement A if no underflow and no overflow has occurred. Finally the statements made unnecessary by the replacement of uses of z with $z_{sat}$ are removed.

The equations for BITS, COND and REACH may use dense techniques or sparse program representation. The method values and conditions are approximated using global data flow analysis, which includes a lattice for approximating the properties (the values and conditions BITS, COND, REACH) and a system of equations relating approximations to various program points Lattice vectors assigned to the variables can be compressed.

The REACH properties include a constant value $C_{OF}(E,v)$ taken by the variable v when the edge E is executed, if overflow had occurred; a constant value $C_{UF}(E,v)$ taken by the variable v when the edge E is executed, if underflow had occurred; and a Boolean flag $ISZ(E,v)$ which indicates whether v carries the same value as the variable z in the basis statement A when the edge E is executed and neither overflow nor underflow had occurred.

These and other aspects of the present invention will become apparent from the following detailed description of the invention, when considered in conjunction with accompanying drawings. The scientific article "A New Approach to DSP Intrinsic Functions", D. Batten, S. Jinturkar, J. Glossner, M. Schulte, P. D'Arcy, Proc. Hawaii Int. Conf. on System Sciences, Jan. 2000, pp. 1-10, XP002299860, discusses the synthesization of intrinsic functions by compilers in DSP programming. >

BRIEF DESCRIPTION OF THE DRAWINGS

Figure 1 is a flow chart of a method incorporating the principles of the present invention.
Figure 2 is a control flow graph of an example add operation using the principles of the present invention.

DETAILED DESCRIPTION OF THE PREFERRED EMBODIMENTS

First is a description of how program are represented for the purposes of deriving the equations. The notion of full-word saturating addition and subtraction is formalized. Next, how the systems of equations are formulated and present an algorithm for recognition of full-word saturating addition and subtraction is described.

PROGRAM REPRESENTATION

The source language programs are decomposed into individual procedures. The present technique is an intra-procedural in that it works on one procedure at a time, independently of others. Herein, the terms "program" and "procedure" are used interchangeably.
Each procedure is represented using its *Control-Flow Graph (CFG).* The nodes in the graph are program statements. The edges in the graph represent possible transfer of program flow between statements. It is assumed that compound expressions in assignment statements have been translated into sequences of simple assignment statements that involve only a single operator each. Such representation is standard and is referred to in the literature as *three-address form* (Ref 1).
There are four kinds of program statements:
1. The unique *entry statement.*
2*. Assignment statements* compute new values through arithmetic operations, perform memory loads or stores, or perform procedure calls. Without loss of generality, the description will be restricted to the assignment statements enumerated below.
Arithmetic operations $OP_B(x, y)$ are parameterized by bit width. For example, signed addition of 8 bit integer values is translated into $add_8(x, y)$. The arithmetic operations include saturating addition $addsat_B$ and subtraction $subsat_B$. These are not present in the initially lowered source program.
3*. Control statements* provide alternative directions in program flow. Without loss of generality, assume that there is only two kinds of control statement: $IF_B(v)$ and *RETURN.* Switch statement $IF_B(v)$ has two descendants in the Control Flow Graph and transfers the control to the first one if the value of v, taken as a B bit integer, is non-zero, and to the second one, otherwise. Other kinds of control-flow statements (e.g. loops, multi-way switches) can be translated into sequences of assignment statements and *IF* statement.
There can only be one *RETURN* statement in a procedure. It indicates that the program control should be transferred to the calling procedure. Optionally, it can specify a value to return: *RETURN(v).*
4. *Merge statements* are points where alternative paths in program execution merge.
Observe the following facts about such representation:

- Assignment statements have exactly one incoming and one outgoing edge. The notation IN(S) and OUT(S) denote the incoming and outgoing edges, respectively, for an assignment statement S. PRE(S) and SUCC(S) denote the predecessor and successor statements, respectively.

- The entry statement has no incoming edges and has exactly one outgoing edge. IN(S) and PRE(S) are meaningless for an entry statement. OUT(S) and SUCC(S) have the same meaning as for the assignment statements.

- Control statements (IF and RETURN) each have exactly one incoming edge. A switch or IF has exactly two outgoing edges: OUT(S, true) and OUT(S, false) - for the true and false directions in the program. RETURN has no outgoing edges. IN(S) and PRE(S) have the same meaning for control statements as for assignment statements. For IF statements, SUCC(S, true) is the node that follows on the "true" direction and SUCC(S, false) is the node that follows on the "false" direction.

- Merge statements have exactly one outgoing edge and can have many incoming edges. OUT(S) and SUCC(S) denote the outgoing edge and the successor statement. For join statements, IN(S) and PRE(S) denote *sets* of incoming edges. Assume that all merge statements have exactly two incoming edges. This simplifies the equations, but does not change the nature of the invention.

Possible kinds of assignment statements and their descriptions are listed in the table below:

| Statement | Description |
|---|---|
| a=addsat$_B$ (b, c)<br>a=subsat$_B$ (b, c) | B-bit saturating addition and subtraction (mathematically defined below).<br>addsat *and* subsat *not present in the source program.* |
| a=OP$_B$ (b, c),<br>where OP is one of: add, sub, mul, and, or, xor, shl , shr, shra | Binary B-bit operations: addition, subtraction, multiplication, bitwise and, bitwise or, bitwise exclusive or, shift left, shift right, shift right arithmetic (with sign extension).<br>2's complement notation is used for arithmetic operations. (Observe that sign negation and bit inversion can be defined using sub and xor.)<br>shra denotes *arithmetic shift right* with the sign bit copied rightward. shra$_B$(-1,1)=-1, always. shr denotes unsigned shift right: shr$_B$(-1,1)=$2^{(B-1)}$-1 |
| a=exts$_{B,A}$ (b) | Sign extends the B bit value b into A bits. If A<B, then the lowest order A bits of b are returned |
| a=ext z$_{B,A}$(b) | Zero extends the B bits value b into A bits. If A<B, then the lowest order A bits of b are returned. |
| a=cmpeq$_B$(b, c)<br>a=cmpne$_B$(b, c) | Comparisons of B-bit integers: equality and inequality. The result is a single condition bit. |
| a=cmplt$_B$(b, c)<br>a=cmple$_B$(b, c) | Signed B-bit comparisons using 2's complement notation: less-that, less-that-or-equals.<br>(Other signed comparisons can be re-written using these two.) |
| a=ucmplt$_B$(b, c)<br>a=ucmple$_B$(b, c) | Unsigned B-bit comparisons. |
| a=constant | Copying of a B-bit constant into the variable |
| NOP | A null operation |
| store$_B$ a,b | Store the lowest B bits of the variable a in the memory location given by variable *b*. |
| a = load$_B$b | Load the lowest B bits at memory location given by *b* are put into variable *a*. |
| a=& b | Put the address of the variable *b* into the variable a. |
| a=CALL F(b, c, ....) CALL F(b,c, ...) | A procedure call, either returning a value or not. |
| a=UNDEF | A special statement indicating that the value of the variable is modified in an unknown way.<br>These statements are inserted as result of inter-procedural analysis and aliasing analysis in order to determine which calls and stores potentially modify which values (Ref 2).<br>Given the state-of-the-art in compilers, it is assumed that such analysis has been performed and the UNDEF statements have been inserted, as the result. |

DEFINITION OF FULL-WORD SATURATING OPERATIONS

Full-word saturating addition and subtraction are defined relative to the basic B-bit 2's complement addition and subtraction as follows:

| | |
|---|---|
| addsat$_B$(x,y) = | SATMIN$_B$, if add$_B$(x,y) underflows<br>SATMAX$_B$, if add$_B$(x,y) overflows<br>add$_B$(x,y), otherwise |
| addsat$_B$(x,y) = | SATMIN$_B$, if sub$_B$(x,y) underflows<br>SATMAX$_B$, if sub$_B$(x,y) overflows<br>sub$_B$(x,y), otherwise |

Where the saturation values SATMIN and SATMAX are the smallest and largest numbers, respectively, that can be represented using B-bit 2's complement arithmetic:

$$SATMIN_B = -2^{(B-1)}$$
$$SATMIN_B = -2^{(B-1)}-1$$

<u>PROBLEM</u>

There are many possible ways of programming the full-word ADDSAT and SUBSAT operators in a high-level programming language such as ANSI C. Below are some possible (but not exclusive) implementations of ADDSAT:

```
int Add_Saturated_1(int x, int y) {
  int z = x + y;
  if ((x > 0) && (y > 0) && (z < 0)) {
      z = SATMAX; /* overflow */
   }
  else if ((x < 0) && (y < 0) && (z > 0)) {
      z = SATMIN; /* underflow */
  }
 return z;
int Add_Saturated_2(int x, int y) {
  int z = x + y;
  int sign_x = x & SATMIN; /* 1000...000 if negative */
  int sign_y = y & SATMIN;
  int sign_z = z & SATMIN;
  if (!sign_x && !sign_y && sign_z) {
      z = SATMAX; /* overflow */
  }
  else if (sign_x && sign_y && !sign_z) {
      z = SATMIN; /* underflow */
  }
  return z
}
int Add_Saturated_3(int x, int y) {
  int z = x + y;
  int sign_x = x & SATMIN; /* 1000...000 if negative */
  int sign_y = y & SATMIN;
  int sign_z = z & SATMIN;
  if ( (~(sign_x ^ sign_y)) & (sign_x & sign_z) ) {
      z = sign x ? SATMIN : SATMAX;
  }
  return z;
}
int Add_Saturated_4 (int x, int y) {
  int z = x + y;
  int sign_x = x & SATMIN; /* 1000...000 if negative */
  int sign_y = y & SATMIN;
  int sign_z = z & SATMIN;
  if ((SATIN ^ (sign_x ^ sign_y)) & (sign_x & sign_z) ) {
      z = SATMAX + ((x >> 31) & 0x1);
```

```
    }
    return z;
  }
  int Add_Saturated_5 (int x, int y) {
    int z = x + y;
    int OF=(-x & ~y & z) >> 31; /* arithmetic shift !*/
    int UF=(x & y & -z) >> 31;
    int N=~(OF | UF);
    return (MAX32 & OF) | (MIN32 & UF) | (z & N);
  }
```

The above program fragments differ in the way they test for the combinations of the sign bits of x, y and z in order to detect overflow and underflow.

In general, a program in three-address intermediate form that does not contain ADDSAT and SUBSAT operations is provided. The goal is to recognize program fragments that can be replaced with ADDSAT and SUBSAT operations.

PROGRAM ANALYSIS TECHNIQUES

Let $G=(N, E)$ be the control-flow graph. N is the set of nodes (statements), and E is the set of edges. Let $v$ be the set of variables in the program.

The algorithm proceeds by computing, for each addition statement $add_B (x, y)$, the set of uses of the assigned variable z that receive the saturated value. The addition statement under consideration is the *basis statement.* The variables x, y and z involved in the basis statement are the *basis variables.* The uses that receive the saturated value of z i s the *saturated uses.* The sign bits of x, y and z are the *basis sign bits* and are referred to as X, Y and Z, respectively.

In order to identify saturated uses, the values of variables and the conditions under which statements are executed as Boolean functions are represented in terms of the basis sign bits in the basis statement. Also computed are values which reach a given use in the case of overflow, underflow or normal execution.

Given a basis statement, the present algorithm computes for the edges E and the variables v in the program the following properties:

- ■ BITS(E,v) is the vector of Boolean functions in terms of the basis sign bits, one function per bit of v. It describes the value of the variable at edge E.
- ■ $C_{OF}(E,v)$ is the constant value (if any) taken by the variable v when the edge E is executed, if overflow had occurred.
- ■ $C_{UF}(E,v)$ is the constant value (if any) taken by the variable v when the edge E is executed, if underflow had occurred.
- ■ ISZ(E,v) is the Boolean flag which says whether v carries the same value as the variable z in the basis statement when the edge E is executed and neither overflow nor underflow had occurred.
- ■ COND(E) is the condition, in terms of the basis sign bits, under which the edge E is executed.

$C_{OF}$, $C_{UF}$ and *ISZ* as a group are considered REACH properties or conditions indicating which values of the variable v reaches a use of variable z in statement S at edges E in the program for overflow or underflow or normal occurrences. They are used directly to identify saturated uses. A variable v used in an assignment or a switch statement receives a saturated value if all of the following conditions are satisfied:

- ■ $C_{OF}(IN(S),v)=SATMAX_B$ or $COND(IN(S), F_{OF})=0$
- ■ $C_{UF}(IN(S),v)=SATMIN_B$ or $COND(IN(S), F_{UF})=0$
- ■ $ISZ(IN(S),v)=1$ or $COND(IN(S), F_N)=0$

In the following subsection, the lattices used in the formulation and solution of data-flow equations for the properties are defined. Then, the equations relating the properties and the source program are described.

The Lattices

The following three lattices are used:

- ■ The $C_{OF}$ and $C_{UF}$ properties are defined on the lattice Aconst used in constant propagation [6]). $\wedge_{const}=\{T,\perp\} \cup Z$.
- ■ ISZ is defined on the two value Boolean lattice $\wedge_{bool} = \{0, 1\}$. The meet operator IIbool is Boolean conjunction: $0 \; II_{bool} \; 1 = 0 \wedge 1=0$. The values are ordered by $0 < 1$.

■ BITS and COND properties use the lattice A formed out of Boolean predicates of three variables. A is described in detail below and is referred to simply as "the lattice" and explicitly qualify the other two lattices.

## Lattice For Approximating Boolean Functions

Let X, Y, Z be the sign bits of the variables x, y, z, respectively. Let $F$ be the set of all possible Boolean functions (predicates) in three variables X, Y, Z. $\underline{0}$ denotes the trivially false predicate: $\underline{0}(X,Y,Z) = 0$. $\underline{1}$ denotes the trivially true predicate: $\underline{1}(X,Y,Z) = 1$.

The lattice for approximating Boolean predicates is $\Lambda = F \cup \{T, \perp \}$. The comparison operator < on $\Lambda$ is defined as: $\perp < F < T$, for all $F \in F$. The meet operator II is defined as:

- F II G = $\perp$, for all F, G E $F$,
- F ≠ G$\lambda$ II $\perp$ = $\perp$ and $\lambda$ II T = $\lambda$,for all $\lambda \in$ A

The Boolean operations (and $\wedge$, or $\vee$, x or $\oplus$ ) are extended to elements of lattice A, as follows (observe that $\underline{1} \oplus F = \neg F$, so xor subsumes bit inversion), in the order of precedence of the rules:

(a) $\lambda_1$ op $\lambda_2$ = $F_1$ op $F_2$, if $F_1, F_2 \in$ $F$, for all Boolean operations
(b) $\underline{1} \vee \lambda = \underline{1}$ and $\underline{0} \wedge \lambda = \underline{0}$, for all $\lambda \in \wedge$
(c) $\perp$ op $\lambda$ = $\perp$ and T op $\lambda$ = T, for all $\lambda \in \Lambda$ and for all Boolean operations

## Lattice Vectors

$\Lambda^B$ is the set of all vectors of length B of lattice elements. The elements of such vectors are numbered from 0 to (B-1) and displayed with the element (B-1) on the left, as in:
$[ V_{(B-1)}, V_{(B-2)}, ..., V_1 , V_0 ]$. (B-1) is the position of the sign bit. $F^B$ is the set of all vectors of length B of Boolean predicates. Clearly, $F^B \subseteq \Lambda^B$.

The meet operation II is extended to the vectors as:
$[V_{B-1},...,V_0]$ II $[U_{B-1}, ..., U_0]$ = $[V_{B-1}$ II $D_{B-1}, ..., V_0$ II $U_0]$

## Evaluation and Application of Lattice Vectors

It is convenient to treat vectors of bits as vectors in $F^B$. For a vector $V=[V_{B-1},...,V_0]$, the function *eval*(V) is defined to be the integer formed from the predicates $V_k$, if they are all either $\underline{0}$ or 1. If any of the vector elements are not $\underline{0}$ or $\underline{1}$ then *eval*(V)=$\perp$. For example, *eval*($[\underline{0},\underline{1},\underline{0},\underline{1}]$=5 and *eval*($[X\wedge Y,\underline{0},\underline{0}\ \underline{0}]$)=$\perp$

Given a vector of predicates $V=[V_{B-1},...,V_0] \in$ $F^B$, the application V(X,Y,Z) of V to the given values of the sign bits X, Y, Z is defined as the vector of bits:

$V(X,Y,Z)=[V_{B-1}(X,Y,Z),...,V_0(XY,Z)]$.

I.e., the "application of a vector" is "the vector of applications". The application of a vector V of lattice values to a predicate F is defined as:
$V(F)= V(X_1Y_1,Z_1)$II...II$V(X_m,Y_m, Z_m)$,
with the meet operator II taken over all $X_k,Y_k,Z_k$ such that $F(X_k,Y_k,Z_k)$ is true.

Also, the *inverse of eval* function: $V=ieval_B(C)$ is defined as vector $V \in$ $F^B$ of bits, such that C=*eval*(V). For example, $ieval_4(3)=[\underline{0},\underline{0},\underline{1},\underline{1}]$ and $ieval_4(-3)=[\underline{1}, \underline{1}, \underline{0}\ \underline{1}]$. The *ieval* function extended to the $\wedge_{const}$ lattice: $ieval_B(\perp)=[\perp,\perp,...,\perp]$; $ieval_B(T)=[T,T,...,T]$.

## Extension of Arithmetic Operations to Lattice Vectors

The B-bit arithmetic operations are extended to operations on vectors of lattice elements. Let $U=[U_{(B-1)}, ..., U_0]$ and $V=[V_{(B-1)},..., V_0]$ be two vectors of lattice elements abstracting the values of the variables u and v. Let $w=op_B (u, v)$ be a B bit arithmetic operation on the variables. The bits of the result w are computed by applying a sequence of basic Boolean operations to the bits of the inputs u and v. The operation $op_B$ is extended to $\wedge^B$ by performing on the elements of the input vector the same sequence of Boolean operations extended to A. The extended operation is $\underline{op_B}$.

For example, if the operation is B-bit addition (ADD), then the rules for deriving the value of the result vector mimic the rules for addition with carry:

Let C=0 (this is the carry bit)
For k from 0 to B-1:

$$W_k = U_k \oplus V_k \oplus C$$

$$C = (C \wedge (U_k \vee V_k)) \vee (U_k \wedge V_k)$$

For multiply operation, precise bit-wise definition, while possible, is not helpful, and thus the result of the multiply operation is defined to be the vector of all bottoms $W=[\bot,\bot,..., \bot]$.

Another example is the $v=\text{NOTZERO}_B (u)$ operation. The vector V for the variable v has exactly one element: $V= [V_0]$. $U=[U_{(B-1)},...,U_0]$. The vectors are related as:

$$V_0 = U_{(B-1)} \vee U_{(B-2)} \vee ... \vee U_0$$

The extension of other operations is straightforward.

Data Flow Properties

In the derivation of the data flow equations, the following notation for the overflow, underflow and no-overflow-and-no-underflow ("neither") predicates are used:

■ If the basis statement is addition:

  o $F_{OF} = \neg X \wedge \neg Y \wedge Z$
  o $F_{UF} = X \wedge Y \wedge \neg Z$

■ If the basis statement is subtraction:

  o $F_{OF} = \neg X \wedge Y \wedge Z$
  o $F_{UF} = X \wedge \neg Y \wedge \neg Z$

• $F_N = \neg F_{OF} \wedge \neg F$

BITS and COND Property

**Definitions**

For every edge E in the program control flow graph and for every variable v, the vector valued property BITS $(E,v) \in \wedge^B$ is defined. Let $\text{BITS}(E,v)=[V_{(B-1)},...., V_0]$. The values of the vector elements are interpreted as follows:

• If $V_k \in \{\underline{1}, \underline{0}\}$, then the k-th bit of the variable v is always constant when control passes over the edge E ("when E is executed").

• If $V_k = F \in F - \{\underline{1}, \underline{0}\}$, then the following holds

  o The basis statement dominates (see Ref 1) the edge E
  o The value of the k-th bit of the variable v equals F(X,Y,Z) when E is executed for the values of X, Y, Z obtained at the most recent execution of the basis statement preceding the execution of E.

• If $V_k = \bot$, then the exact value for the bit as a function of X, Y, Z we cannot be determined.

• If $V_k = T$, then the value of the approximation for this bit is yet undetermined. This value is used at intermediate stages of iterative solution of data flow equations, but it does not appear in the final solution.

The subscript notation BITS(E,v)$_k$ is used to denote the k-th bit of the BITS(E,v) property.

For every edge E in the program graph, the defined condition property COND(E) $\in \Lambda$ is interpreted as follows:

• If COND(E) = F $\in F$, then the following holds:

o The edge E is dominated by the basis statement
o If the basis statement is executed *and* F(X,Y,Z)=1 (is true), for the values of X, Y, Z just after the basis statement is executed, then E is executed at some later point.

• If COND(E) = $\perp$, then the condition under which E is executed can not determined.

• If COND(E) = T, then the condition under which E is executed is yet to be determined.

**Equations for BITS and COND**

The equations for BITS and COND properties are formed from the control flow graph, according to the following rules:

• The equations for the basis statement S are:

o BITS(OUT(S), z) = [Z, $\perp,\perp...,\perp$]
o BITS(OUT(S), x) = [ X, [$\perp,\perp...,\perp$]
o BITS(OUT(S), y) = [Y, [$\perp,\perp...,\perp$.]
o COND(OUT(S)) =$\underline{1}$
o BITS(OUT(S),v) = BITS(IN(S),v), for all v $\in$ v-{x,y,z}

• The equations for the entry statement S are:

o BITS(OUT(S), v) = [$\perp$, ..., $\perp$], for all v $\in$ v)
o COND(OUT(S)) = $\perp$

• For every merge statement S, form equations as follows: Let $E_0$ and $E_1$ be the incoming edges of S

o Let $E_0$ and $E_1$ be the incoming edges of S
o For every variable v $\in$ v BITS(OUT(S),v)=BITS($E_0$,v)II BITS($E_m$,v).
o COND(OUT(S)) = COND($E_0$) $\vee$ COND($E_1$)

• For every switch statement S of the form IF$_B$(v), create equations as follows:

o Let BITS(IN(S), v) = [$V_{(B-1)}$, $V_{(B-2)}$, ..., $V_0$]
o Let P = $V_{(B-1)} \vee ... \vee V_0$(the true branch is taken when v is non-zero)
o COND(OUT(S, true)) = COND(IN(S)) $\wedge$ P
o COND(OUT(S, false)) = COND(IN(S)) $\wedge \neg$P
o For every variable v $\in$ v, for all k $\in$ (0,B-1]:

■ BITS(OUT(S, true), v)$_k$ = BITS(IN(S),v)$_k$
■ BITS(OUT(S, false), v)$_k$ = BITS(IN(S),v)$_k$

■ For every assignment statement S, other than the basis statement, of the form p=OP(q,r) where OP is an arithmetic operation:

o BITS(OUT(S),p) = $\underline{OP}$(BITS(IN(S),q), BITS(IN(S),r)), where $\underline{OP}$ denotes the extension of the arithmetic operation OP to the vectors of lattice elements.
o BITS(OUT(S),v)=BITS(IN(S),v),for all v $\in$ v- {p}.

■ Other assignments to a variable p, including loads and calls:

o BITS(OUT(S),p) = [$\perp,\perp,...,\perp$]

o BITS(OUT(S),v) = BITS(IN(S),v), for all v ∈ ν-{p}

$C_{OF}$ AND $C_{UF}$ PROPERTIES

The equations for the $C_{OF}$ and $C_{UF}$ properties are as follows.

■ For the basis statement and the entry statement:

o $C_{OF}(OUT(S),v)=C_{UF}(OUT(S),v)=\perp$,
for all variables v (including x, y, z)

■ For an assignment statement S of the form w=OP(u,v):

o Let U=BITS(IN(S),u), V=BITS(IN(S),v)
o $C_{OF}=eval(\underline{OP}(U(F_{OF}),V(F_{OF})))$
o $C_{UF}=eval(\underline{OP}(U(F_{UF}),V(F_{UF})))$

These rules have the following intuition: try to obtain the constant values, if any, that bits of the input variables carry. The vector/predicate evaluation expressions, $U(F_{OF})$, etc., perform just that. Then apply the operation to the resulting bits and see if a constant can be formed out of the result.

For example, consider the code fragment (assuming x is one of the operands in the basis statement, and the basis statement is 32-bit addition).

t1=(x >> 31) & 0x1;
z=0x7fffffff + t1;

The BITS value for the t1 variable is [$\underline{0},\underline{0}$ ...,$\underline{0}$,X], since t1 get the sign bit of x shifted to the right. The BITS value for the constant is [$\underline{0},1,1,...,\underline{1}$]. The $C_{OF}$ and $C_{UF}$ values are:

$C_{OF}=eval(\underline{add32}([\underline{0},\underline{0} ...,\underline{0},X](F_{OF}), [\underline{0},1,1 ...,\underline{1}](F_{OF})))=$
$eval(\underline{add32}([0,0,..,0,0], [0,1,1,...,1]))=$
$eval([0,1,1,...,1])=0x7fffffff=MAX_{32}$
$C_{UF}=eval(\underline{add32}([\underline{0},\underline{0} ...,\underline{0},X](F_{UF}), [\underline{0},1,1....,\underline{1}](F_{UF})))=$
$eval(\underline{add32}([0,0,..,0,1], [0,1,1,...,1]))=$
$eval([1,0,0,...,0])=0x80000000=MIN_{32}$

This is how [$\underline{0},\underline{0}$ ...,$\underline{0}$,X]($F_{OF}$) and [$\underline{0},\underline{0},...;\underline{0}$]($F_{UF}$) are computed. Since it is assumed that the basis statement is addition, $F_{OF}$ is true when X=Y=0 and Z=1. $F_{UF}$ is true when X=Y=1 and Z=0. Therefore, in order to apply the vector [$\underline{0}$, $\underline{0},...$ ,$\underline{0}$,X] to $F_{OF}$, its elements are evaluate (they are all Boolean functions) for X=Y=0 and Z=1. This gives only one vector of bits: [0,0,...,0,0]. Similarly, [$\underline{0},\underline{0},...,\underline{0}$ X]($F_{UF}$)=[0,0,...,0,1].

At switches, the value for $C_{OF}$ and $C_{UF}$ are propagated to the outgoing edges. At merge statements, the equations are formed as follows. Let $E_0$ and $E_1$ be the two incoming edges for a merge statement S. Then:

■ If (COND($E_k$) ∧ $F_{OF}$) ∈ {$\underline{0}$ T},
then $C_{OF}(OUT(S),v)=C_{OF}(E_{1-k},v)$, for k=0,1;
otherwise $C_{OF}(OUT(S),v)=C_{OF}(E_0,v)$ II $C_{OF}(E_1,v)$
■ If (COND($E_k$ ∧ $F_{UF}$)∈ {$\underline{0}$,T},
then $C_{UF}(OUT(S),v)=C_{UF}(E_{1-k},v)$, for k=0,1;
otherwise $C_{UF}(OUT(S),v)=C_{UF}(E_0,v)$ II $C_{UF}(E_1,v)$

The rules state that if one of the incoming edges is executed only when overflow/underflow occurs or its condition has not yet been determined, then the value from the opposite edge is propagated.

ISZ PROPERTY

The rules for the ISZ property are:

■ For the *entry* statement S: ISZ(OUT(S),v=0, for all variables v
■ For the *basis* statement S: ISZ(OUT(S),z)=1; ISZ(OUT(S),v)=0, for all other variables
■ For any other assignment statement S of the form w=op (u, v) :

o Let $a=eval(BITS(IN(S),u)(F_N))$; $b=eval(BITS(IN(S),v)(F_N))$
o If $a$ is a constant such that op(a,v)=v, then ISZ(OUT(S),w)=ISZ(IN(S),v)
o If $b$ is a constant such that op(u,b)=u, then ISZ(OUT(S),w)=ISZ(IN(S),u)
o Otherwise ISZ(OUT(S),w)=0

This rules state that if the assignment statement really acts as a copy operation under the neither-overflow-nor-underflow condition, then the value of ISZ is propagated.

■ For all outgoing edges E of a *switch* statement S: ISZ(E,v)=ISZ(IN(S),v), for all variables v
■ For a *merge* statement S with incoming edges $E_0$ and $E_1$ and the outgoing edge E:

o If $(COND(E_k) \wedge F_N) \in \{0,T\}$, then ISZ(E,v)=ISZ($E_{k-1}$,v), for k=0,1, for all variables v.
o Otherwise ISZ(E,v)=ISZ($E_0$,v)$\wedge$ISZ($E_1$,v). (Recall, that $\wedge$ is the meet operator for ISZ)

In summary, variables inherit the ISZ property through copies. If one side of a merge statement can only be executed either under overflow or underflow, then the ISZ property is propagated from the opposite side.

ALGORITHM

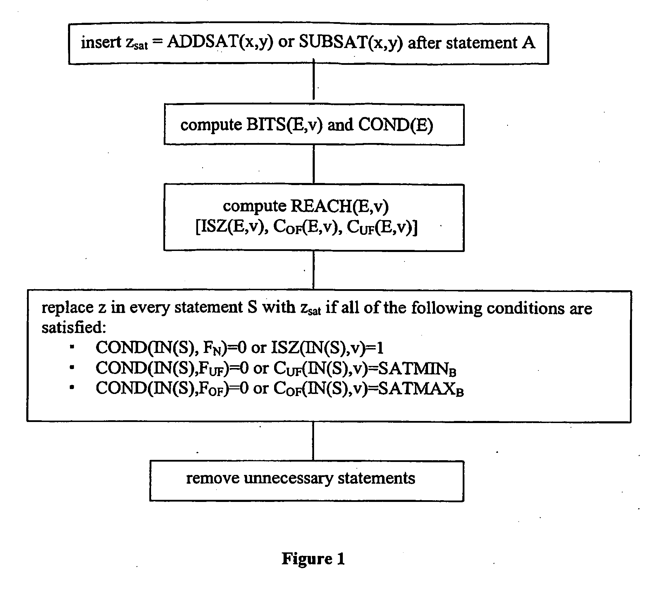

The overall algorithm for recognizing full-word saturating addition and subtraction is listed below and illustrated in figure 1. The algorithm is independent of the technique used to solve the data flow equations (see Ref 1, 5, 6, 7).

```
RecognizeAddsatAndSubsat (CFG G) {
    Initialize A to the set of all addition and subtraction
         statements in G;
    while (A ≠ ∅) {
        S=some member of A; A=A-{S};
        /* S is of the form z=addB(x,y)or z=subB(x,y) */
        Let B be the bit width of S;
        Append, after S, the statement S' of the form
             zsat=addsatB(x,y);
        Compute BITS, COND properties
             (using any applicable technique);
        Compute COF, CUF and ISZ properties
             (using any applicable technique);
        ReplaceSaturatedUses(G, S, S', B);
        Perform dead code elimination;
        Let R be the set of eliminated statements;
        A=A-R;
    }
}
ReplaceSaturatedUses (CFG G, Stmt S, Stmt S', int B) {
    Let X, Y, Z be the basis sign bits in S;
    Let FOF be the overflow predicate;
    Let FUF be the underflow predicate;
    Let FN=¬FOF∧¬FUF be the "neither" or "normal" predicate;
  o Let SATMAXB=2(B-1) -1; SATMINB=-2(B-1);
    for all assignment and switch statements H {
        for all variables v used in H {
            Let E=IN (H)
            The use is saturated if ALL of the following
                    conditions are satisfied:
            (a) COND (E)∧FN=0 or ISZ(E, v) =1
            (b) COND (E)∧FOF=0 or COF(E, v)=SATMAXB
            (c) COND (E)∧FUF=0 or CUF(E, v)=SATMINB
            If the use is saturated,
        replace v with zsat (from S')
         }
    }
}
```

IMPLEMENTATION DETAILS

The following describes the details of an implementation:

**Representing Boolean Predicates**

We need a efficient way to manipulate Boolean predicates, since they are at the core of our method. A Boolean predicate of three variables can be represented using an 8-bit integer. There are $2^3=8$ combinations of the values of the arguments of the function. The integer has a bit for every combination of the input variables. Boolean operations on three-input Boolean functions are isomorphic to bitwise operations on 8-bit integers.

**Compressing Vectors of Predicates**

Usually we are interested only a single bit of each value. For the variables x, y and z in the basis statement, this is the highest-order bit (the sign bit). For variables that are the results of comparisons, this is the lowest order bit. It is possible that intermediate values will carry some combination of the sign bits shifted to other positions. We speed up analysis by compressing vector values of the BITS property into triplet of the form: <k,λ,flag>, where:

- k is the position of the "interesting" bit
- λ is the lattice value for this position
- flag indicates the other bits in the value are all 0, all 1, all λ, or otherwise

Data flow equations can be trivially modified to accommodate this representation. In effect, this representation performs lossy compression on the original vectors of lattice values, with no degradation in recognition due to the compression.

**Conditional Propagation**

Wegman-Zadeck style conditional propagation is used in the computation of the BITS and COND properties. The changes are straightforward and are analogous to the conditional propagation algorithm in Reference 7. During evaluation of merge statements, the meet operator is taken over the incoming edges, which are known to be executed. Herein, these are the edges E for which COND(E) is not T or 0. During evaluation of switch statements, the outgoing edge E for which COND(E) evaluates to 0 is never visited by the algorithm.

**Normalizing The Input Program**

The basic algorithm is sensitive to presence of copies. For example, if the routine is written as:

```
int addsat (int x, int y) {
   int a=x;
   int b=y;
int z = a + b;
if (SATMIN32 & ( ~ (x ^ y) & (a ^ z) ) ) {
 z = SATMAX32 + (b >> 31) & 0x1;
}
return z;
}
```

then the basic algorithm fails to identify the saturated use in the return statement, since the basis statement is z=a+b, and there are no references in the code to sign bits of a or b. This difficulty is not unique to our approach. Other program analysis and optimization problems, such as common sub-expression elimination are sensitive to copies, as well.

The solution is to use some form of global value numbering (Ref 8) in order to normalize the input program.

In the present example of implementation, global value numbering and copy propagation are used. Dependence Flow Graphs is used as our intermediate representation (Ref 3). DFG construction coupled with scalar elimination also finds some equivalence between the uses of the variables a and x. In basic form of the invention, the equations can also be solved using well-known iterative techniques (Refs 5,6). Sparse methods based on the static single assignment (SSA) form as well as dependence-flow graphs (DFGs) (Refs 3,4) can be used to reduce time and space complexity of solution.

## EXAMPLE 1

Consider the following computation of saturating addition:

```
int addsat (int x, int y) {
int z = x + y;
if ( SATMIN32 & ( ~ (x ^ y) & (x ^ z) ) ) {
 z = SATMAX32 + (x >> 31) & 0x1;
}
return z;
}
```

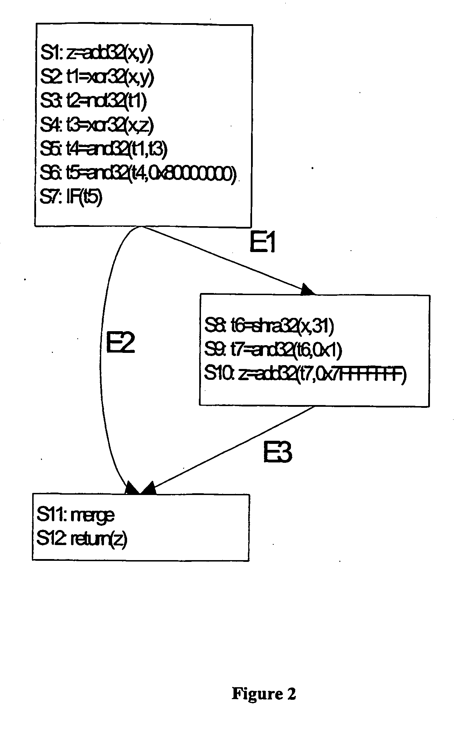

The intermediate representation is shown in Figure 2. For brevity, statements have coalesced into basic blocks. The selected values of the properties are:

■ BITS(IN(S6,t4)) = [¬(X⊕Y)∧(X⊕Z),⊥,⊥, ...,⊥]. This is because t4 equals and 32 (not32 (xor32 (x, y) ), xor32 (x, z) )

■ BITS(OUT(S6),t5) = [¬(X⊕Y)∧(X⊕Z), $\underline{0}$ $\underline{0}$, ..., $\underline{0}$ ], because the statement masked out all the bits but the leftmost.

■ The true side of the conditional in S7 is taken when t5≠0. This is equivalent to the disjunction of the bits of t5, which equals: ¬(X⊕Y)∧(X⊕Z).

Thus, $COND(E1)= ¬(X⊕Y)∧(X⊕Z)$ and

$COND(E2)=¬COND(E1)$

■ Observe that $¬(X⊕Y)∧(X⊕Z)=F_{OF}∨F_{UF}=¬F_N$, therefore $COND(E_1))=¬F_N$ and $COND(E_2)=F_N$

■ BITS(IN(S10),t7)=[0,0,...,0,X], since t7 equals to and 32 (1, shra32 (x, 31) ).

■ BITS(OUT(S10),z)=$\underline{add32}$([0,0,..,X], [0,1,1,..,1]). Following addition rules: BITS(OUT(S 10),z)=[X,¬X,¬X,...,¬X]

■ $C_{OF}(OUT(S10),z)=$

$eval(\underline{add32}([0,0,...,0,X](F_{OF}),[0,1,1,...,1](F_{OF})))=$

$eval(\underline{add32}([0,0,...,0,0], [0,1,1,...,1]))=$

$eval([0,1,1,...,1])=SATMAX_{32}$

■ $C_{UF}(OUT(S10),z)=$

$eval(\underline{add32}([0,0,...,0,X](F_{UF}),[0,1,1,...,1](F_{UF})))=$

$eval(\underline{add32}([0,0,...,0,1], [0,1,1,...,1]))=$

$eval([1,0,0,...,0])=SATMIN_{32}$

■ $ISZ(OUT(S1),z)=1$

■ $ISZ(E_2,z)=1$

■ Since $COND(E_3)∧F_N=¬F_N∧F_N=\underline{0}$, the ISZ property is propagated from E2 to the output of the S11 merge: $ISZ(OUT(S11),z)=ISZ(IN(S12),z)=ISZ(E_2)=1$

■ Similarly, $C_{UF}$ and $C_{OF}$ are propagated from E3 to the output of the merge. Thus, at the return statement S 12 :

$C_{OF}(IN(S12),z)=SATMAX_{32}$

$C_{UF}(IN(S12),z)=SATMIN_{32}$

$ISZ(IN(S12),z)=1$

This establishes that the use of z in S 12 is saturated.

## EXAMPLE 2

The analysis for the function below illustrates the propagation of the ISZ property:

```
int addsat_5 (int x, int y) {
    int z = x + y;
    int OF=(~x & ~y & z) >> 31;
    int UF=(x & y & ~z) >> 31;
    int N=~(OF | UF);
    return (SATMAX32 & OF) I (SATMIN32 & UF) | (z & N);
}
```

Here is the intermediate representation with some of the expressions unexpanded:

S1: z=add32(x,y)
S2: OF=shra32 (and32 (notx), and32 (not (y),z)), 31)
S3: UF=shra32 (and32 (x, and32 (y,not (z))), 31)

```
S4: N=not32 (or32 (OF, UF) )
S5: t1=and32 (OF, 0x7fffffff)
S6: t2=and32 (UF, 0x80000000)
S7: t3=and32 (N, z)
S8: t4=or32 (t1, or32 (t2, t3))
S9: return t4
```

Below are the solutions for some of the properties. For clarity, edge designations have been deleted from the properties, since every variable is defined exactly once:

■ BITS(OF)=[$F_{OF}$, $F_{OF}$, ..., $F_{OF}$],
BITS(UF)=[$F_{UF}$, $F_{UF}$, ..., $F_{UF}$],
BITS(N)=[$F_N$, $F_N$, ..., $F_N$],
BITS(z)=[Z,$\perp$,$\perp$,...,$\perp$]

■ Observe that BITS(OF)($F_N$)=[$\underline{0,0}$, ...,$\underline{0}$]=BITS(UF)($F_N$), since $F_{UF}$ and $F_{OF}$, on one hand, and $F_N$, on the other hand, are mutually exclusive.

■ ISZ(z)=1

■ *eval*(BITS(N)($F_N$))=0xffffffff, therefore the and32 operation in S7 acts as a copy of z into t3 when no overflow and no underflow occurs: ISZ(t3)=1

■ BITS(t1)=[0,$F_{OF}$,$F_{OF}$,...,$F_{OF}$],
BITS(t2)=[$F_{UF}$,0,..,0]

■ *eval*(BITS(t1)($F_N$))=0, *eval*(BITS(t2)($F_N$))=0. Therefore the two or32 operations in S8 just copy the value of t3 to t4 when no overflow and no underflow occurs: ISZ(t4)=1

■ Some $C_{OF}$ values:

$C_{OF}$(t1)=*eval*($\underline{and32}$(BITS(OF)($F_{OF}$), [0,1,1,...,1]($F_{OF}$)))=
*eval*($\underline{and32}$([1,1,...,1], [0,1,1,...,1]))=
*eval*([0,1,1,...,1])=SATMAX$_{32}$

$C_{OF}$(t2)=*eval*($\underline{and32}$(BITS(UF)($F_{OF}$), [1,0,0,...,0]($F_{OF}$)))=
*eval*($\underline{and32}$([0,0,...,0], [1,0,0,...,0]))=
*eval*([0,0,...,0])=0

$C_{OF}$(t3)=*eval*(and32(BITS(N)($F_{OF}$), [Z,$\perp$,$\perp$,...,$\perp$]))=
*eval*($\underline{and32}$([0,0,...,0], [Z,$\perp$,$\perp$,...,$\perp$]))=
*eval*([0,0,...,0])=0

■ Informally, $C_{OF}$(t4)=or32(MAX$_{32}$,0,0)=MAX$_{32}$

■ Some $C_{UF}$ values:

$C_{UF}$(t1)=*eval*($\underline{and32}$(BITS(OF)($F_{UF}$), [0,1,1,...,1]($F_{UF}$)))= *eval*($\underline{and32}$([0,0,...,0], [0,1,1....,1]))=0
$C_{UF}$(t2)=*eval*($\underline{and32}$(BITS(UF)($F_{UF}$), [1,0,0,...,0]($F_{UF}$)))=
*eval*($\underline{and32}$([1,1,...,1], [1,0,0,...,0]))=
*eval*([1,0,...,0])=SATMIN$_{32}$
$C_{UF}$(t3)=*eval*(and32(BITS(N)($F_{UF}$), [Z,$\perp$,$\perp$,...,$\perp$]))=
*eval*($\underline{and32}$([0,0,...,0], [Z,$\perp$,$\perp$,...,$\perp$]))=
*eval*([0,0,...,0])=0

■ Informally, $C_{UF}$(t4)=or32(0,SATMIN$_{32}$,0)=SATMIN$_{32}$ $C_{UF}$(t4)=SATMIN32, $C_{OF}$(t4)=SATMAX32 and ISZ(t4)=1. Therefore, t4 carries the saturated value.

Although the present invention has been described and illustrated in detail, it is to be clearly understood that this is done by way of illustration and example only and is not to be taken by way of limitation. The scope of the present invention is to be limited only by the terms of the appended claims.

**REFERENCES**

[1] Alfred V. Aho, Ravi Sethi, Jeffrey D. Ullman, "Compilers, principles, techniques, and tools", Addison-Wesley, 1988

[2] Hans Zima, Barbara Chapman, "Supercompilers for Parallel and Vector Computes", ACM Press, 1991

[3] Richard Johnson, Keshav Pingali, "Dependence Based Program Analysis", In the Proceedings of the ACM SIGPLAN 1993 Conference of Programming Language Design and Implementation (PLDI).

[4] Ron Cytron et al, "An efficient method for computing static single assignment form", In Conference Record of the 16th Annual ACM Symposium on Principles of Programming Languages.

[5] Partic Cousot, Radhia Cousot, "Automatic Synthesis of Optimal Invariant Assertions: Mathematical Foundations", In the Proceedings of the Symposium on Artificial Intelligence and Programming Languages, 1977.

[6] Gary Kildall, "A Unified Approach to Global Program Optimization", In the Proceedings of the 1973 Symposium on Principles of Programming Languages.

[7] Mark Wegman, F. Kenneth Zadeck, "Constant Propagation with Conditional Branches", In ACM Transaction on Programming Languages and System, vol. 13, No. 2, April 1991, pp. 181 - 210.

**Claims**

1. A method of recognizing full-word saturating addition and subtraction in a program for every basis statement A of the form z=ADD(x,y) or z=SUB(x,y), the method to be performed on a digital signal processor and comprising:

   inserting the statement $z_{sat}$ = ADDSAT(x,y) or $z_{sat}$ = SUBSAT(x,y) immediately following the statement A;
   computing for a variable v bits values BITS(E,v) of the variable v at edges E in the program;
   computing condition COND(E) under which the edges E are executed in the program;
   computing reach REACH(E,v) properties indicating which values of the variable v reach a use of variable z in statement S at edges E in the program for overflow or underflow or normal occurrences;
   replacing z in a statement S that uses z with the use of $z_{sat}$ if all of the following conditions hold for the statement S: a) the only values of z that reach S cause SATMAX to be assigned to v when overflow has occurred, b) the only values of z that reach S cause SATMIN to be assigned to v if underflow has occurred, and c) the only values of z that reach S assign z from the basis statement A to v if no underflow and no overflow has occurred; and removing statements made unnecessary by the replacement of uses of z with $z_{sat}$ in the previous step.

2. The method according to Claim 1, including defining overflow, underflow and "normal" predicates for REACH as follows, wherein X, Y, Z are the signs of variables x, y, z, respectively:

| Predicate | Form of the basis statement A | |
|---|---|---|
| | z=ADD(x,y) | z=SUB(x,y) |
| Overflow condition $F_{OF}$ | $F_{OF} = \neg X \wedge \neg Y \wedge Z$ | $F_{OF} = \neg X \wedge Y \wedge Z$ |
| Underflow condition $F_{UF}$ | $F_{UF} = X \wedge Y \wedge \neg Z$ | $F_{UF} = X \wedge \neg Y \wedge \neg Z$ |
| No overflow and no underflow ("normal") $F_N$ | $F_N = \neg FOF \wedge \neg FUF$ | |

3. The method according to Claim 2, wherein the REACH properties include a constant value $C_{OF}(E,v)$ taken by the variable v when the edge E is executed, if overflow had occurred; a constant value $C_{UF}(E,v)$ taken by the variable v when the edge E is executed, if underflow had occurred, and a Boolean flag ISZ(E,v) which indicates whether v carries the same value as the variable z in the basis statement A when the edge E is executed and neither overflow nor underflow had occurred.

4. The method according to claim 1, wherein the occurrences of overflow or underflow or normal are determined as a function of the sign bits of *X, Y* and *Z*.

5. The method according to Claim 1, including solving the equations using dense techniques.

**6.** The method according to Claim 1, including solving the equations using sparse program representation.

**7.** The method according to Claim 1, wherein the values, properties and conditions are approximated using global data flow analysis, which includes a lattice for approximating BITS, COND, REACH and a system of equations relating approximations to various program points.

**8.** The method according to Claim 7, including compressing of lattice vectors assigned to the variables.

**9.** The method of any of the preceding claims, further comprising, for each basis addition statement $z=x+y$ or subtraction statement $z=x-y$, formulating data flow equations that describe the following properties of the program statements being analyzed:

a) values BITS of program variables x, y, z as Boolean functions of the sign bits of $X$, $Y$ and $Z$;
b) condition COND under which program statements S are executed as Boolean functions of the sign bits of $X$, $Y$ and $Z$; and
c) condition REACH of which values of the variables reach a use of variable z in statements S for overflow or underflow or normal occurrences,
replacing z in a statement S of the program that uses z with the use of $z_{sat}$ if and only if all of the following conditions hold for that statement S: a) the only values of z that reach S cause SATMAX to be assigned to z when overflow has occurred, b) the only values of z that reach S cause SATMIN to be assigned to z if underflow has occurred, and c) the only values of z that reach S are from the basis statement A if no underflow and no overflow has occurred.

**10.** The method according to claim 9, including removing statements made unnecessary by the replacement of uses of z with $z_{sat}$.

**11.** The method according to Claim 9, including solving the equations for BITS, COND and REACH using dense techniques.

**12.** The method according to Claim 9, including solving the equations for BITS, COND and REACH using sparse program representation.

**Patentansprüche**

**1.** Verfahren zum Erkennen sättigender Vollwortaddition und -subtraktion in einem Programm für jede Basisaussage A der Form z=ADD(x,y) oder z=SUB(x,y), wobei das Verfahren auf einer digitalen Signalverarbeitungseinrichtung auszuführen ist und umfasst:

Einfügen der Aussage $z_{sat}$=ADDSAT(x,y) oder $z_{sat}$=SUBSAT(x,y) direkt nach der Aussage A;
Berechnen, für eine Variable v, der Bitwerte BITS (E,v) der Variable v an Kanten E im Programm;
Berechnen der Bedingung COND(E), unter der die Kanten E im Programm ausgeführt werden;
Berechnen von REACH(E,v)-Eigenschaften, die angeben, welche Werte der Variable v eine Verwendung der Variable z in der Aussage S an Kanten E im Programm bei Overflow oder Underflow oder unter normalen Umständen erreichen;
Ersetzen von z in einer Aussage S, die z verwendet, durch die Verwendung von $z_{sat}$, falls alle der folgenden Bedingungen für die Aussage S erfüllt sind: a) die einzigen Werte von z, die S erreichen, bewirken, dass v SATMAX zugeschrieben wird, wenn Overflow eingetreten ist, b) die einzigen Werte von z, die S erreichen, bewirken, dass v SATMIN zugeschrieben wird, wenn Underflow eingetreten ist, und c) die einzigen Werte von z, die S erreichen, schreiben v z aus der Basisaussage A zu, falls weder Underflow noch Overflow eingetreten sind; und
Entfernen von Aussagen, die durch das Ersetzen der Verwendungen von z durch $z_{sat}$ im vorigen Schritt unnötig geworden sind.

**2.** Verfahren nach Anspruch 1, wobei Overflow, Underflow und "normale" Prädikate für REACH wie folgt definiert sind, wobei X, Y,Z jeweils die Vorzeichen der Variablen x, y, z sind:

| Prädikat | Form der Basisaussage A | |
|---|---|---|
| | z=ADD(x,y) | z=SUB(x,y) |
| Overflow-Bedingung $F_{OF}$ | $F_{OF} = \neg X \wedge \neg Y \wedge Z$ | $F_{OF} = \neg X \wedge Y \wedge Z$ |
| Underflow-Bedingung $F_{UF}$ | $F_{UF} = X \wedge Y \wedge \neg Z$ | $F_{UF} = X \wedge \neg Y \wedge \neg Z$ |
| Weder Overflow noch Underflow ("normal") $F_N$ | $F_N = \neg FOF \wedge \neg FUF$ | |

**3.** Verfahren nach Anspruch 2, wobei die REACH-Eigenschaften einen konstanten Wert $C_{OF}(E,v)$, der von der Variable v angenommen wird, wenn die Kante E ausgeführt wird, falls Overflow eingetreten ist, einen konstanten Wert $C_{UF}(E,v)$, der von der Variable v angenommen wird, wenn die Kante E ausgeführt wird, falls Underflow eingetreten ist, sowie eine Boolesche Kennung ISZ(E,v), die angibt, ob v den gleichen Wert wie die Variable Z in der Basisaussage A trägt, wenn die Kante E ausgeführt wird und weder Overflow noch Underflow eingetreten sind, enthalten.

**4.** Verfahren nach Anspruch 1, wobei das Auftreten von Overflow oder Underflow oder normalen Umständen als eine Funktion der Vorzeichenbits von X, Y und Z bestimmt werden.

**5.** Verfahren nach Anspruch 1, umfassend das Lösen der Gleichungen mittels dichter Techniken.

**6.** Verfahren nach Anspruch 1, umfassend das Lösen der Gleichungen mittels dünnbesetzter Programmdarstellung.

**7.** Verfahren nach Anspruch 1, wobei die Werte, Eigenschaften und Bedingungen mittels globaler Datenflussanalyse approximiert werden, die ein Gitter zum Approximieren von BITS, COND, REACH sowie ein System von Gleichungen, die die Approximationen zu verschiedenen Programmpunkten in Beziehung setzen, enthält.

**8.** Verfahren nach Anspruch 7, umfassend das Komprimieren der den Variablen zugeschriebenen Gittersektoren.

**9.** Verfahren nach einem der vorhergehenden Ansprüche, ferner umfassend
Formulieren für jede Basisadditionsaussage z=x+y oder Basissubtraktionsaussage z=x-y von Datenflussgleichungen, die die folgenden Eigenschaften der analysierten Programmaussagen beschreiben:

    a) Werte BITS von Programmvariablen x, y, z als Boolesche Funktionen der Vorzeichenbits von X, Y, und Z;
    b) eine Bedingung COND, unter der Programmaussagen S als Boolesche Funktionen der Vorzeichenbits von X, Y und Z ausgeführt werden; und
    c) eine Bedingung REACH für die Werte der Variablen, die eine Verwendung der Variable z in Aussagen S bei Overflow oder Underflow oder unter normalen Umständen erreichen;

Ersetzen von z in einer Aussage S des Programms, die z verwendet, durch die Verwendung von $z_{sat}$, genau dann wenn alle der folgenden Aussagen für die Aussage S erfüllt sind: a) die einzigen Werte von z, die S erreichen, bewirken, dass z SATMAX zugeschrieben wird, falls Overflow eingetreten ist, b) die einzigen Werte von z, die S erreichen, bewirken, dass z SATMIN zugeschrieben wird, falls Underflow eingetreten ist, und c) die einzigen Werte von z die S erreichen, aus der Basisaussage A sind, falls weder Underflow noch Overflow eingetreten sind.

**10.** Verfahren nach Anspruch 9, umfassend das Entfernen von Aussagen, die durch das Ersetzen der Verwendungen von z durch $z_{sat}$ unnötig geworden sind.

**11.** Verfahren nach Anspruch 9, umfassend das Lösen der Gleichungen für BITS, COND und REACH mittels dichter Techniken.

**12.** Verfahren nach Anspruch 9, umfassend das Lösen der Gleichungen für BITS, COND und REACH mittels dünn besetzter Programmdarstellung.

**Revendications**

1. Procédé de reconnaissance d'addition et de soustraction en mot entier saturantes dans un programme pour chaque instruction de base A de la forme z = ADD(x,y) ou z = SUB(x,y), le procédé étant effectué sur un processeur de signaux numériques et comprenant les étapes consistant à :

insérer l'instruction $z_{sat}$ = ADDSAT(x,y) ou $z_{sat}$ = SUBSAT(x,y) immédiatement à la suite de l'instruction A ;
calculer, pour une variable v, des valeurs de bits BITS(E,v) de la variable v au niveau de bords E dans le programme ;
calculer une condition COND(E) dans laquelle les bords E sont exécutés dans le programme ; calculer des propriétés d'étendue REACH(E,v) indiquant quelles valeurs de la variable v atteignent une utilisation de la variable z dans une instruction S au niveau de bords E dans le programme pour des occurrences de débordement ou de sous-utilisation ou normales ;
remplacer z dans une instruction S qui utilise z par l'utilisation de $z_{sat}$ si toutes les conditions qui suivent sont vraies pour l'instruction S : a) les seules valeurs de z qui atteignent S entraînent l'attribution de SATMAX à v lorsqu'un débordement s'est produit, b) les seules valeurs de z qui atteignent S entraînent l'attribution de SATMIN à v si une sous-utilisation s'est produite, et c) les seules valeurs de z qui atteignent S attribuent z de l'instruction de base A à v si aucune sous-utilisation ni aucun débordement ne s'est produit ; et
retirer des instructions rendues inutiles par le remplacement des utilisations de z par $z_{sat}$ à l'étape précédente.

2. Procédé selon la revendication 1, comprenant la définition de prédictions de débordement, de sous-utilisation et de « normal » pour REACH comme suit, où X, Y, Z sont les signes de variables x, y, z, respectivement :

| Prédiction | Forme de l'instruction de base A | |
|---|---|---|
| | z = ADD (x, y) | z = SUB(x,y) |
| Condition de débordement $F_{OF}$ | $F_{OF} = \neg X \wedge \neg Y \wedge Z$ | $F_{OF} = \neg X \wedge Y \wedge Z$ |
| Condition de sous-utilisation $F_{UF}$ | $F_{UF} = X \wedge Y \wedge \neg Z$ | $F_{UF} = X \wedge \neg Y \wedge \neg Z$ |
| Pas de débordement et pas de sous-utilisation (« normal ») $F_N$ | $F_N = \neg FOF \wedge \neg FUF$ | |

3. Procédé selon la revendication 2, dans lequel les propriétés de REACH comprennent une valeur constante $C_{OF}$(E, v) prise par la variable v lorsque le bord E est exécuté, si un débordement s'est produit ; une valeur constante $C_{UF}$(E,v) prise par la variable v lorsque le bord E est exécuté, si une sous-utilisation s'est produite, et un indicateur booléen ISZ(E,v) qui indique si v porte la même valeur que la variable z dans l'instruction de base A lorsque le bord E est exécuté et que ni un débordement, ni une sous-utilisation ne s'est produit.

4. Procédé selon la revendication 1, dans lequel les occurrences de débordement ou de sous-utilisation ou normales sont déterminées en fonction des bits de signe de X, Y et Z.

5. Procédé selon la revendication 1, comprenant la résolution des équations en utilisant des techniques denses.

6. Procédé selon la revendication 1, comprenant la résolution des équations en utilisant une représentation de programme rare.

7. Procédé selon la revendication 1, dans lequel les valeurs, propriétés et conditions sont approchées en utilisant une analyse de flux de données globale, qui comprend un réseau pour approcher BITS, COND, REACH et un système d'équations concernant des approximations de divers points de programme.

8. Procédé selon la revendication 7, comprenant la compression de vecteurs de réseau attribués aux variables.

9. Procédé de selon l'une quelconque des revendications précédentes, comprenant en outre, pour chaque instruction d'addition de base z = x + y ou instruction de soustraction z = x - y, la formulation d'équations de flux de données qui décrivent les propriétés suivantes des instructions de programme en cours d'analyse :

a) des valeurs BITS de variables de programme x, y, z en tant que fonctions booléennes des bits de signe X, Y et Z ;

b) une condition COND dans laquelle des instructions de programme S sont exécutées en tant que fonctions booléennes des bits de signe de X, Y et Z ; et

c) une condition REACH dont les valeurs des variables atteignent une utilisation d'une variable z dans des instructions S pour des occurrences de débordement ou de sous-utilisation ou normales,

en remplaçant z dans une instruction S du programme qui utilise z par l'utilisation de $z_{sat}$ si et seulement si toutes les conditions qui suivent sont vraies pour cette instruction S : a) les seules valeurs de z qui atteignent S entraînent une attribution de SATMAX à z lorsqu'un débordement s'est produit, b) les seules valeurs de z qui atteignent S entraînent une attribution de SATMIN à z lorsqu'une sous-utilisation s'est produite, et c) les seules valeurs de z qui atteignent S proviennent de l'instruction de base A si aucune sous-utilisation ni aucun débordement ne s'est produit.

10. Procédé selon la revendication 9, comprenant le retrait d'instructions rendues inutiles par le remplacement des utilisations de z par $z_{sat}$.

11. Procédé selon la revendication 9, comprenant la résolution des équations pour BITS, COND et REACH en utilisant des techniques denses.

12. Procédé selon la revendication 9, comprenant la résolution des équations pour BITS, COND et REACH en utilisant une représentation de programme rare.

| insert $z_{sat}$ = ADDSAT(x,y) or SUBSAT(x,y) after statement A |

| compute BITS(E,v) and COND(E) |

| compute REACH(E,v)<br>[ISZ(E,v), $C_{OF}$(E,v), $C_{UF}$(E,v)] |

replace z in every statement S with $z_{sat}$ if all of the following conditions are satisfied:
- COND(IN(S), $F_N$)=0 or ISZ(IN(S),v)=1
- COND(IN(S),$F_{UF}$)=0 or $C_{UF}$(IN(S),v)=SATMIN$_B$
- COND(IN(S),$F_{OF}$)=0 or $C_{OF}$(IN(S),v)=SATMAX$_B$

| remove unnecessary statements |

**Figure 1**

S1: z=add32(x,y)
S2: t1=xor32(x,y)
S3: t2=not32(t1)
S4: t3=xor32(x,z)
S5: t4=and32(t1,t3)
S6: t5=and32(t4,0x80000000)
S7: IF(t5)

E1

E2

S8: t6=shra32(x,31)
S9: t7=and32(t6,0x1)
S10: z=add32(t7,0x7FFFFFFF)

E3

S11: merge
S12: return(z)

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. BATTEN ; S. JINTURKAR ; J. GLOSSNER ; M. SCHULTE ; P. D'ARCY.** A New Approach to DSP Intrinsic Functions. *Proc. Hawaii Int. Conf. on System Sciences,* January 2000, 1-10
- **ALFRED V. AHO ; RAVI SETHI ; JEFFREY D. ULLMAN.** Compilers, principles, techniques, and tools. Addison-Wesley, 1988
- **HANS ZIMA ; BARBARA CHAPMAN.** Supercompilers for Parallel and Vector Computes. ACM Press, 1991
- **RICHARD JOHNSON ; KESHAV PINGALI.** Dependence Based Program Analysis. *Proceedings of the ACM SIGPLAN 1993 Conference of Programming Language Design and Implementation,* 1993

- **RON CYTRON et al.** An efficient method for computing static single assignment form. *Conference Record of the 16th Annual ACM Symposium on Principles of Programming Languages*
- **PARTIC COUSOT ; RADHIA COUSOT.** Automatic Synthesis of Optimal Invariant Assertions: Mathematical Foundations. *Proceedings of the Symposium on Artificial Intelligence and Programming Languages,* 1977
- **GARY KILDALL.** A Unified Approach to Global Program Optimization. *Proceedings of the 1973 Symposium on Principles of Programming Languages*
- **MARK WEGMAN ; F. KENNETH ZADECK.** Constant Propagation with Conditional Branches. *ACM Transaction on Programming Languages and System,* April 1991, vol. 13 (2), 181-210